# EUROPEAN PATENT APPLICATION

(11) **EP 1 170 170 A1**
(43) Date of publication of application: **09.01.2002**
(21) Application number: 01830127.5
(22) Date of filing: 23.02.2001
(51) Int. Cl.: B60N 2/72, A47C 7/00

(54) **An upholstery item for a motor vehicle**

(30) Priority: 03.07.2000 IT TO000116
(71) Applicant: Textrim S.r.l., 10128 Torino (IT)
(72) Inventor: Vergnano, Mario, 10023 Chieri (Torino) (IT)
(74) Representative: Gerbino, Angelo

(57) **Abstract**

An upholstery item for a motor vehicle, a seat for example, comprises at least one composite element (10) including at least one layer of thermoplastic material (11) with a covering layer (12) of textile material or of synthetic leather, for example, bonded thereto.

## Description

The present invention relates to an upholstery item for a motor vehicle, in particular to a seat.

In the present description, the term seat is intended to refer to any object able to support a seated person, and constituted by one portion called a squab and another called a backrest. The term squab should be understood to mean the portion of the seat for supporting the lower region of the body and for partially supporting the upper portion of the legs, whose profile is horizontal or inclined by less than 30° to the support plane. The term backrest should be understood to mean the portion of the seat which provides support for the back of the seated person.

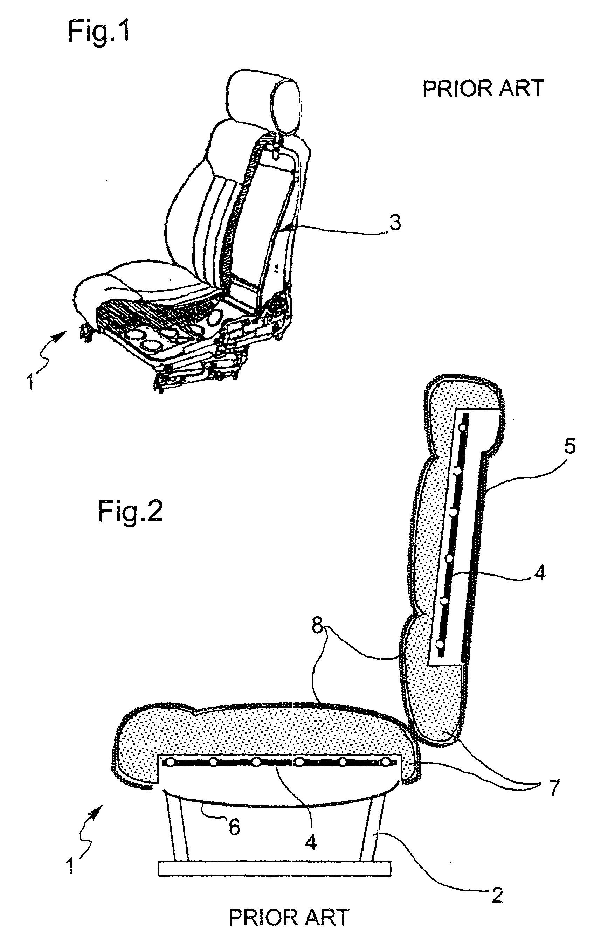

A motor vehicle seat is made up of various parts, assembled together. Figure 1 schematically illustrates a seat 1 according to the prior art, with a metal support frame 3, but not showing details such as articulations and adjustments, which are not relevant to the present invention.

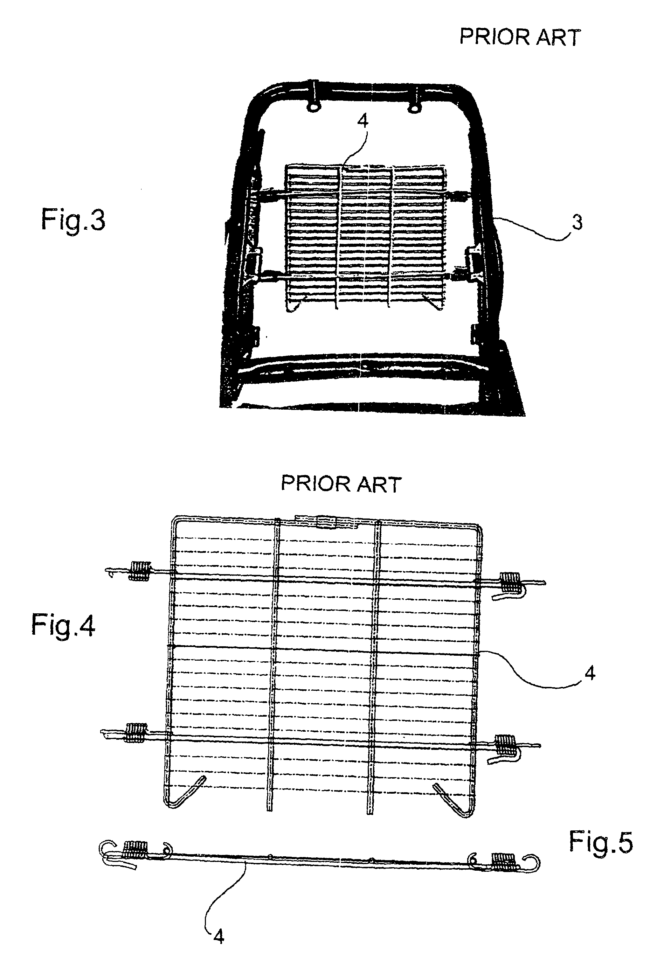

The vertically sectioned view of this known seat in Figure 2 also shows:
- a structure 2 for supporting the seat and fixing it to the floor of the motor vehicle, generally constituted by metal tubes and/or thick plates; the design of the structure 2 can be very complicated since it is also the means for making various adjustments to the position of the seat and sometimes of the squab;
- padding 7 for the squab and the backrest, usually made of polyurethane foam;
- a structure 4 for supporting the padding 7 of the squab, constituted by a specially woven loose mesh of metal and/or synthetic fibre threads; Figures 3 to 5 illustrate in greater detail the structure 4 which can come in various forms, since, fitted with appropriate controls, it can be responsible for adjusting the shape of the squab;
- a further structure 4 for supporting the padding 7 of the backrest, having the same structural characteristics as the preceding structure, except for differences due to location (different mechanical forces and stresses, various adjustments to the shape of the backrest);
- a panel 5 for closing the back of the backrest; this panel 5 can be made of various heat formable materials, covered in textile material or simply intended to be covered by the seat upholstery; in some seat models, there is no panel 5, it being replaced by a simple and light rear padding;
- a cradle 6, generally made of thin formed metal plate, for closing the underside of the squab; in some very inexpensive models of seat, this cradle 6 is not provided; and
- an outer upholstery 8 for covering all visible portions of the seat and fulfilling both an aesthetic and a structural role, by holding the paddings 7 in place and protecting them in use; the upholstery 8 is generally a composite material: polyurethane foam with a fine-mesh textile backing, for example, so as to provide the required characteristics of comfort, strength and conformability to the seat.

The presence of the structures 4 - seen as indispensable until now in order to provide the necessary resilience, the possibility of adjusting the shape and a sufficient degree of manufacturing simplicity - makes it necessary to use very thick padding 7 so as to cover these structures 4 which, since they are basically an open mesh, would provide an unacceptable level of comfort. It must also be added that, since the padding 7 is resting on a mesh of widely spaced wires, it would tend to tear and break up before very long. In order to prevent this, prior art seats generally have a heavy cloth of textile material inserted before they are moulded, which is usually by injection. This precaution complicates the manufacturing process and is a major source of wastage during the production of the padding.

In order to overcome the problems listed above in relation to the prior art, the object of the present invention is to provide a motor vehicle upholstery item which includes at least one composite element comprising at least one layer of thermoplastic material with a covering layer bonded to it.

Such a composite element can replace a conventional mesh support structure for the padding of a seat providing considerable advantages. For instance:
- the regular surface of the composite element makes it unnecessary to insert a protective fabric layer into the padding, thereby reducing costs and wastage; this smoothness also makes it possible to reduce the thickness of the padding, thereby further reducing costs and reducing the weight of the seat;
- the thermoforming characteristics of the element mean that it can be moulded to the optimum shape for making squabs and backrests of particular shapes; and
- the possibility of adding various inserts to the composite element allows to achieve the same possibilities of adjustment as conventional mesh support structures.

In addition, the composite element can be perforated for allowing transpiration and/or housing heating or cooling elements, such as carbon fibre resistances, which are bonded to or incorporated between the layers constituting the element.

It is advantageous if the thermoplastic material is manufactured at least in part from secondary raw materials from residual or wasted material and/or recycled scrap material and it can be selected from a group which includes polyester, polyamide, polypropylene, polyethylene and mixtures thereof. The thermoplastic material can also contain natural and/or synthetic fibrous material, either added as filler or already present in the secondary raw material.

The use of the latter provides the added advantage of reducing the quantity of material ending up as scrap or simply, and wastefully, being incinerated. In addition, at the end of their useful life, the composite elements can be re-used to provide the constituents of similar new elements, after removing any metal inserts.

These secondary raw materials could be scrap from textile weaving plants, remnants from material used for the upholstery of seats and other items, inner door panels, dashboards, bumpers and other parts recycled from automobile scrap yards. These heterogeneous materials, made of different basic polymers, are broken up and melted down into a homogeneous mix which is then rolled into sheets. A covering layer, of a textile material for example, such as a knitted or woven material, a chintz, a non-woven fabric or a combination thereof, is then bonded to the sheets.

Alternatively, the covering layer can be made of an aesthetically pleasing polymeric material, formed in a plurality of sublayers, for example an inner PVC sublayer and an outer polyurethane sublayer, so as to simulate leather.

The covering layer can generally serve to improve the mechanical strength of the composite element and/or to improve its appearance.

Thanks to the thermoplastic properties of the polymeric layer, the composite element can be heat formed into countless shapes and can easily be cut or punched.

In seats according to the invention, a composite element of the type described above can also be used to close off the rear of the backrest.

The scope of the present invention also allows for other upholstery elements used inside a motor vehicle, such as panels for doors and uprights, rear shelves and other components of the inside of the motor vehicle, which include or are constituted by one or more composite elements of the aforementioned type.

It is also possible for a plurality of composite elements of the type described above to be combined in items according to the invention, thereby forming a laminate structure of greater thickness. In addition, various inserts - such as threads, hooks, cellulose fibres, carbon fibres, aramid fibres heating or cooling elements and the like - may be interposed between linked composite elements in order to give the finished item specific properties.

Further advantages and characteristics of the invention will become apparent from the detailed description which follows, provided purely by way of non-limitative example, with reference to the appended drawings, in which:
Figure 1 (already described) is a cutaway view of a prior art seat;
Figure 2 (already described) is a vertical section of the seat of Figure 1;
Figure 3 (already described) is a schematic view of a seat with a padding-support structure made according to the prior art;
Figure 4 (already described) is a front view of the support structure of Figure 3;
Figure 5 (already described) is a plan view of the support structure of Figure 3;

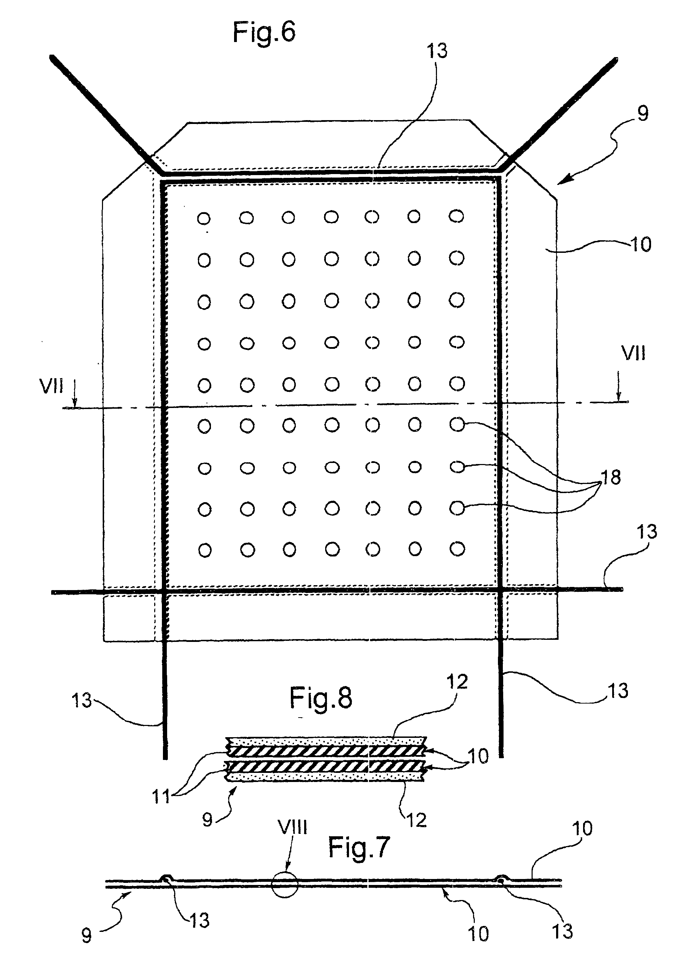

Figure 6 is a schematic view of a detail of a seat of the invention;
Figure 7 is a section taken on the line VII-VII of Figure 6; and
Figure 8 is an enlarged-scale view of a detail of Figure 7.

A padding-support structure 9 (the padding being not illustrated for the sake of clarity) of a motor vehicle seat includes two composite elements 10 coupled together.

Each element 10 includes a layer 11 made by shredding, melting and laminating scraps of polyester fabric left over from the manufacture of seat covers, combined during the laminating process with a covering layer 12 of black polyester non-woven fabric of a weight of 50 g/m². Alternatively, the so-called synthetic leather could be used for the layer 12.

The elements 10 (which each start with a thickness of 2mm and dimensions of 370 x 420mm) are coupled with the layers 11 facing each other and a plurality of wires 13 interposed between them, with their ends externally protruding so that they may later be connected to the seat frame.

The wires 13 are e.g. of mild nickel steel, 3mm in diameter and covered by a sheath of high-density polyethylene so as to have a total diameter of 5mm, for a length of 650mm.

The elements 10 are coupled by heat forming and punched to give their top corners a 45° bevel. During the punching operation, holes 18 with a diameter of 6mm are also formed, in order to lighten the structure 9 and enable air to pass through.

The final thickness of the structure 9 is 3.6mm and it is able to support a seat padding of a thickness, varying in dependence on the spacing of the support points, between 20 and 40mm. The seat thus obtained is as comfortable and as strong as a similar model made according to the prior art. However a saving in weight of 400g has been made and there is no need for the protective cloths of the prior art.

Naturally, the principle of the invention remaining the same, manufacturing details and embodiments may vary widely from those described purely by way of non-limitative example, without departing thereby from the scope of the invention. In particular, the invention covers upholstery items which include one or more composite elements having an aesthetic and/or structural role, possibly in combination with other components acting as attachments, improving the finish or strengthening the structure.

## Claims

1. A motor vehicle upholstery item which includes at least one composite element (10) comprising at least one layer of thermoplastic material (11) with a covering layer (12) bonded thereto.

2. An item according to Claim 1, in which the said thermoplastic material is chosen from the group consisting of polyester, polyamide, polypropylene, polyethylene and combinations thereof.

3. An item according to any preceding Claim, in which the said thermoplastic material contains natural and/or synthetic fibrous material.

4. An item according to any preceding Claim, in which the said thermoplastic material is obtained at least in part from secondary raw materials coming from workshop remnants and scraps and/or from recycled scrap material.

5. An item according to any preceding Claim, in which the said covering layer (12) is a textile material.

6. An item according to Claim 5, in which the said textile material is chosen from the group consisting of knitted fabric, woven fabric, chintz fabric, non-woven fabric and combinations thereof.

7. An item according to any Claim from 1 to 4, in which the said covering layer (12) is of an aesthetically pleasing polymeric material.

8. An item according to Claim 7, in which the said covering layer (12) is composed up of a plurality of sublayers.

9. An item according to Claim 8, in which the said covering layer (12) is composed of a sublayer of PVC and an outer sublayer of polyurethane.

10. An item according to any preceding Claim, comprising a plurality of the said composite elements (10), coupled together to form a thicker structure (9).

11. An item according to Claim 10, in which inserts are interposed between the said coupled composite elements (10).

12. An article according to any preceding Claim, in the form of a seat, which includes a frame and padding, and to which said at least one composite element (10) is associated.

13. A seat according to Claim 12, including a pair of composite elements (10), coupled with the thermoplastic layers (11) facing each other.

14. A seat according to Claim 13, in which a plurality of wires (13) are arranged between the said coupled elements (10), with their ends externally protruding so as they can be fixed to the frame of the seat.

15. A seat according to either of Claims 13 or 14, in which the composite elements (10) have a plurality of holes (18).
